# EUROPEAN PATENT SPECIFICATION

(11) **EP 1 775 145 B1**
(45) Date of publication and mention of the grant of the patent: **01.12.2010**
(21) Application number: 05753478.6
(22) Date of filing: 23.06.2005
(51) Int. Cl.: B60C 17/01, B60C 17/06

(54) **AIR BLADDER FOR SAFETY TIRE**
LUFTSCHLAUCH FÜR SICHERHEITSREIFEN
CHAMBRE À AIR POUR PNEUMATIQUE DE SÉCURITÉ

(30) Priority: 27.07.2004 JP 2004218749
(43) Date of publication of application: 18.04.2007
(73) Proprietor: Bridgestone Corporation, Tokyo 104-8340 (JP)
(72) Inventor: NAGAHARA, Takeo, c/o BRIDGESTONE CORPORATION, Kodaira-shi, Tokyo 1878531 (JP)
(74) Representative: Whalley, Kevin
(86) International application number: PCT/JP2005/011522
(87) International publication number: WO 2006/011325

(56) References cited:
- WO-A1-02/096678
- JP-A- 2002 144 444
- JP-A- 2002 160 505
- JP-A- 2003 136 924

## Description

### TECHNICAL FIELD

This invention relates to an air bladder for a safety tire, and more particularly to an air bladder for a safety tire capable of making a cylindrical form at an inflated state without adhering inner surfaces thereof to each other in the forming step.

### BACKGROUND ART

Heretofore, as a safety tire or a run-flat tire capable of continuously running over a considerable distance up to a place for repairing and mending even if a puncture or the like is caused in a pneumatic tire are researched and developed various ones. For example, there are known a tire including an inventive air bladder such as a reinforced air bladder, a multi-room air bladder, an air bladder filled with a foam or a sponge, a folding air bladder or the like, a tire applied with a sealant, a tire filled with a foam or a sponge, a tire including a core and so on.

However, it is difficult to produce this type of the conventional tires because a production method, a material for an auxiliary member and the like are is peculiar, and there is often a problem in the assembling onto a rim and the handling. For example, the safety tire provided with the multi-room air bladder is unrealistic because it is difficult to produce the multi-room air bladder. Also, it is difficult to develop an injection method or a material for the sealant or the foam in the tire applied with the sealant or the tire filled with the foam. In the tire including the core, there is a problem in the assembling of the core onto the rim. Moreover, it is difficult to produce the moose-type safety tire filled with the sponge or the like, and it is also difficult to control and stabilize its form.

On the contrary, the safety tire provided with the reinforced air bladder is simple in the structure, easy in the production and the assembling onto the rim, economical in view of a material and has an excellent safety without losing a low fuel consumption property. As regards the safety tire provided with the reinforcing air bladder, for example, there are energetically made various studies for improving a kind and location of a reinforcing member arranged in the air bladder, and as a result, there are developed safety tires having a high durability in the normal running and in the drop of the internal pressure (see JP-A-2002-172918, JP-A-2002-192923, JP-A-2002-200906, JP-A-2004-90807, JP-A-2003-39912 and a brochure of WO 02/43975A).

### DISCLOSURE OF THE INVENTION

Heretofore, the air bladder for the safety tire is usually produced by sticking a rubber member for the air bladder on a flat drum, folding back both widthwise ends of the rubber member and joining both the ends of the rubber member at an outer diameter side with respect to the flat drum to make a cylindrical form. In this forming method, however, inner surfaces of the rubber member are adhered to each other in the stitching or the like after the folding of the rubber member, and hence the air bladder cannot be rendered into a cylindrical form in the subsequent inflation step. If the inner surfaces are partly adhered, there is a problem that an area surrounding the adhered portion is largely extended to cause the breakage of the air bladder and the like.

It is, therefore, an object of the invention to solve the above-mentioned problems of the conventional techniques and to provide an air bladder for a safety tire capable of making a cylindrical form at an inflated state without adhering inner surfaces thereof to each other in the forming step.

The inventor has made various studies in order to achieve the above object and discovered that the problem of adhering the inner surfaces of the air bladder to each other in the forming is eliminated by subjecting the inner surface of the rubber member for the air bladder to an anti-adhesion treatment or by disposing a member for preventing adhesion and it is possible to render the air bladder into a cylindrical form in the inflation, and as a result the invention has been accomplished.

That is, the air bladder for the safety tire according to a first aspect of the invention is provided as claimed in claim 1.

In this case, even if the inner surfaces of the rubber member are contacted with each other by stitching after the folding of the rubber member, it is possible to prevent the inner surfaces from adhering to each other and render the air bladder into a cylindrical form in the inflation. At this moment, it is further preferable that the member having one surface adhering to the rubber and another surface not adhering to the rubber is stuck onto a full inner surface of the rubber member other than the joint portion and a neighborhood thereof. In the latter case, the inner surfaces can be surely prevented from adhering to each other in the stitching while sufficiently ensuring the joining property of the rubber member at the joint portion. Furthermore, it is preferable that the member having one surface adhering to the rubber and another surface not adhering to the rubber is stuck on at least one of the inner surfaces contacting with each other in the rubber member after the folding of both the widthwise ends of the rubber member. Even in this case, the inner surfaces can be sufficiently prevented from adhering to each other in the stitching. As the member having one surface adhering to the rubber and another surface not adhering to the rubber is preferable a film in which a cement is applied on one surface thereof.

According to a second aspect of the invention there is provided an air bladder for a safety tire according to claim 5. In this case, even if the inner surfaces of the rubber member are contacted with each other by stitching after the folding of the rubber member, it is possible to prevent the inner surfaces, from adhering to each other and render the air bladder into a cylindrical form in the inflation. At this moment, it is further preferable that the sheet-shaped member is stuck onto a full inner surface of the rubber member other than the joint portion and a neighborhood thereof. In the latter case, the joining property of the rubber member can be sufficiently ensured at the joint portion, and the inner surfaces can be surely prevented from adhering to each other because the sheet-shaped member is contacted with itself in the stitching.

According to the invention, there can be provided an air bladder for a safety tire capable of making a cylindrical form at an inflated state without adhering inner surfaces thereof to each other.

### BRIEF DESCRIPTION OF THE DRAWINGS

FIG. 1 is a section view of an embodiment of an air bladder in each step of the production of the air bladder for a safety tire according to the invention.
FIG. 2 shows an example of a safety tire and rim assembly using an air bladder according to the invention:
FIG. 3 is a section view of an air bladder in Examples.

### BEST MODE FOR CARRYING OUT THE INVENTION

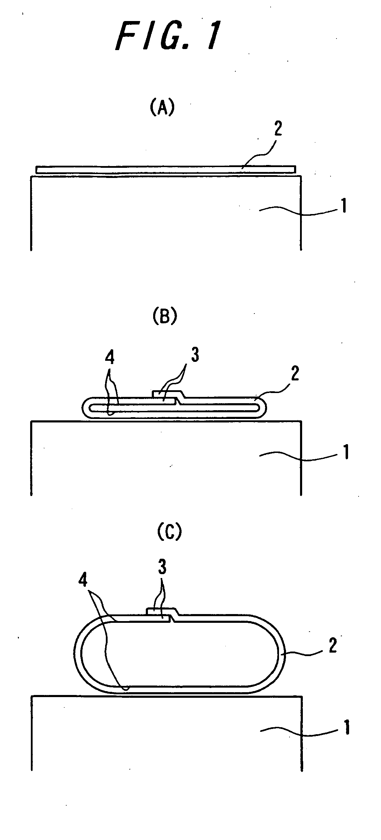

The air bladder for the safety tire according to the invention will be described in detail below with reference to the accompanying drawings. FIG. 1 is a section view of an embodiment of an air bladder in each step of the production of the air bladder for a safety tire according to the invention. In the production method of the air bladder shown in the figure, a sheet-shaped rubber member 2 is stuck on a flat drum 1 at the sticking step of the rubber member shown in FIG. 1 (A), and both widthwise end portions 3 of the rubber member 2 are folded back and then both the widthwise end portions 3 of the rubber member 2 are jointed at an outer diameter side with respect to the flat drum 1 at the folding step of the rubber member shown in FIG. 1 (B), and thereafter the rubber member (air bladder) 2 is rendered into a cylindrical form at the inflation step shown in FIG. 1 (C). In the air bladder for the safety tire according to the invention, the inner surfaces 4 of the rubber member 2 are not adhered to each other after both the widthwise end portions 3 of the rubber member 2 are folded back.

As a means for preventing the inner surfaces 4 of the rubber member 2 from adhering to each other are mentioned means for subjecting the inner surface 4 of the rubber member 2 for the air bladder to an anti-adhesion treatment and means for disposing a member for preventing adhesion. As the member for preventing the adhesion disposed on the inner surface 4 of the rubber member 2 are mentioned a member having one surface adhering to a rubber and another surface not adhering to a rubber, a sheet-shaped member and the like.

As the member having one surface adhering to the rubber and another surface not adhering to the rubber which may be disposed on the inner surface 4 of the rubber member 2 are mentioned a film having one surface coated with a cement and the like. As a material of the film are mentioned a thermoplastic polyolefin such as polyethylene, polypropylene or the like, a thermoplastic polyurethane and so on. As the cement are mentioned a butyl-based cement and the like. Such a member is disposed on the rubber member 2 so that the surface adhering to the rubber can adhere to the inner surface 4 of the rubber member 2.

As the sheet-shaped member disposed on the inner surface 4 of the rubber member 2 are mentioned a paper, a fabric and the like in addition to the above film.

Also, the disposing position of the member having one surface adhering to the rubber and another surface not adhering to the rubber is not particularly limited as far as the inner surfaces 4 of the rubber member 2 can be prevented from adhering to each other, but it is preferable that, for example, the member is disposed on full inner surface of the rubber member other than the joint portion and a neighborhood thereof, or at least one of the inner surfaces 4 contacting with each other in the rubber member 2 after the folding of both the widthwise ends 3 of the rubber member. At this moment, the neighborhood of the joint portion is preferable to be a portion of not more than 40 mm from the joint portion.

Further, the disposing position of the sheet-shaped member is not particularly limited as far as the inner surfaces 4 of the rubber member 2 can be prevented from adhering to each other, but it is preferable that, for example, the sheet-shaped member is disposed on full inner surface of the rubber member other than the joint portion and a neighborhood thereof. The neighborhood of the joint portion is preferable to be a portion of not more than 40 mm from the joint portion. The sheet-shaped member is stuck on the inner surface of the rubber member through a tackiness of rubber and can improve the workability and productivity in the production of the air bladder for the safety tire.

As described above, the inner surfaces 4 can be surely prevented from adhering to each other in the stitching while sufficiently ensuring the joining property of the rubber member at the joint portion by subjecting full inner surface of the rubber member other than the joint portion and a neighborhood thereof to the anti-adhesion treatment or disposing the member for preventing adhesion thereon. Also, the inner surfaces 4 can be sufficiently prevented from adhering to each other in the stitching even by subjecting only at least one of the inner surfaces 4 contacting with each other in the rubber member after the folding of both the widthwise end portions 3 of the rubber member 2 to the anti-adhesion treatment or disposing the member for preventing adhesion thereon.

The rubber member 2 used in the air bladder is not particularly limited, and rubber members usually used in the conventional air bladder for the safety tire can be used. A reinforcing member such as a cord, a nonwoven fabric or the like may be rubberized and disposed in the air bladder made of the rubber member for improving the strength of the air bladder.

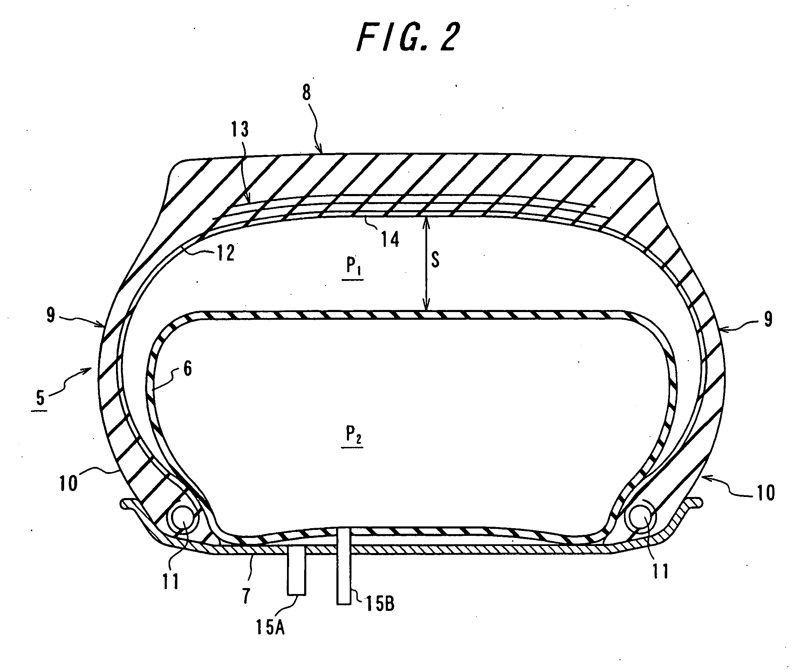

Next, the safety tire using the above-mentioned air bladder for the safety tire according to the invention will be explained. An example of a safety tire and rim assembly using the air bladder according to the invention is shown in FIG. 2. The assembly shown in FIG. 2 comprises a safety pneumatic tire comprising a combination of a tubeless tire 5 and an air bladder 6 of a hollow toric form distinctly housed in the tubeless tire 5, and a standard rim 5 corresponding to the tubeless tire 5.

The tubeless tire 5 comprises a tread portion 8, a pair of sidewall portions 9 and a pair of bead portions 10 connecting to both sides thereof, a carcass 12 toroidally extending between bead cores 11 embedded in the respective bead portions 10, a belt 13 disposed on a crown portion of the carcass 12 outward in a radial direction of the tire and composed of at least two belt layers, and an innerliner 14 disposed inside the carcass 12. In FIG. 2, 15A and 15B represent a valve for filling air, inert gas or the like into the tubeless tire 5 and the air bladder 6, respectively.

In the safety tire shown in the figure, an internal pressure P₂ of the air bladder 6 is set to be higher than an internal pressure P₁ of the tubeless tire 5. After the respective given internal pressures are separately filled into the tubeless tire 5 and the air bladder 6, the air bladder 6 has an outer surface holding a gap S to the inner surface of the tread portion of the tire 5 in a ground contacting region of the tread portion at a state of running under loading. Therefore, the outer surface of the air bladder 6 is not rubbed with the inner surface of the tread portion (the inner surface of the innerliner 14) during the normal running, and hence the damage of the air bladder 6 itself and the damage of the inner surface of the tread portion due to the air bladder 6 are not caused.

On the other hand, the air bladder 6 is extended in a circumferential direction of the tire to closely contact with the inner surface of the tubeless tire 5 when the tubeless tire 5 is punctured and only the inner pressure of the tubeless tire 5 becomes zero as a gauge pressure. Thus, the air bladder 6 works like the conventional tire tube to take over the bearing of the load from the tubeless tire 5 while suppressing the bending deformation small in the puncture of the tubeless tire 5, so that both of the tubeless tire 5 and the air bladder 6 can be prevented from subjecting to fatal damage even in the puncture of the tubeless tire 5. Since the air bladder according to the invention can be easily rendered into a cylindrical form in the inflation and is not damaged in the inflation step, the tubeless tire 5 can be safely run over a certain distance by using the air bladder of the invention in the safety tire even after it is punctured.

### <EXAMPLES>

The following examples are given in illustration of the invention and are not intended as limitations thereof.

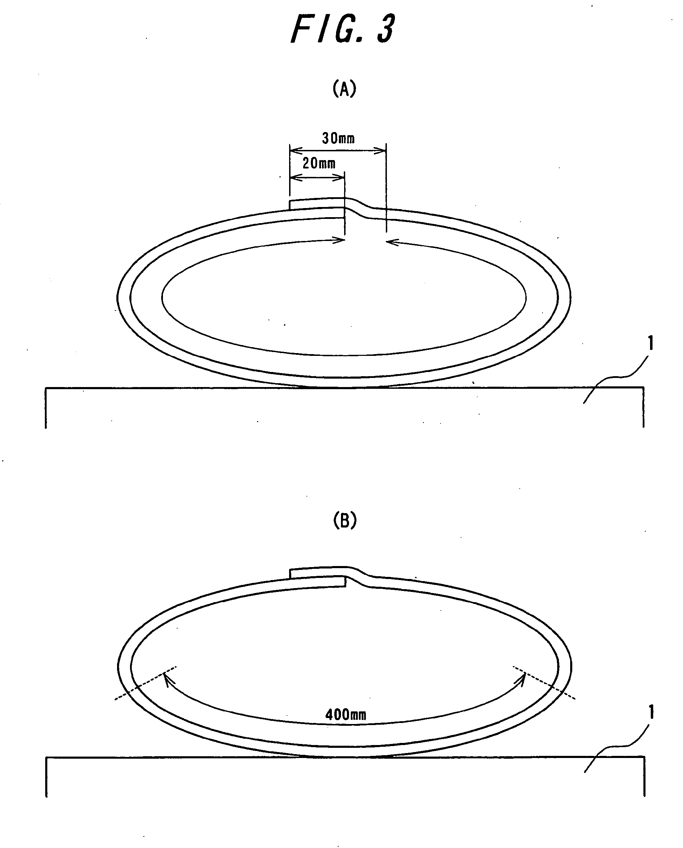

An air bladder for a safety tire having a structure shown in FIG. 3 and a size of 495/45 R22.5 is prepared and then tested whether or not such an air bladder becomes cylindrical in the inflation during the forming. An air bladder in Comparative Example 1 is not subjected to an anti-adhesion treatment. In an air bladder of Example 1, a width of a contacting portion between an inner surface at one end of a rubber member and an outer surface at the other end thereof is 20 mm and stearic acid is applied onto the rubber member other than a portion ranging from an end of the rubber member up to 30 mm at an outer diameter side with respect to a drum as shown in FIG. 3 (A). In an air bladder of Example 2, stearic acid is applied onto a portion of the folded rubber member having a width of 400 mm at an inner diameter side of the rubber member with respect to the drum as shown in FIG. 3 (B). In an air bladder in Example 3, talc is applied instead of stearic acid used in the air bladder of Example 1. In an air bladder in Example 4, talc is applied instead of stearic acid used in the air bladder of Example 2. In an air bladder of Example 5, a film having one surface applied with a cement [a polyethylene film coated with a butyl-based cement] is stuck on the portion to be coated with stearic acid in the air bladder of Example 1 instead of stearic acid. In an air bladder of Example 6, the film having one surface applied with the cement is stuck on the portion to be coated with stearic acid in the air bladder of Example 2 instead of stearic acid. In an air bladder of Example 7, a polyethylene film (not coated with a cement) is stuck as a sheet-shaped film on the portion to be coated with stearic acid in the air bladder of Example 1 instead of stearic acid. The results are shown in Table 1. In Table 1, × shows that the air bladder becomes not cylindrical in the inflation and ○ shows that the air bladder becomes cylindrical in the inflation.

**Table 1**

| | Means for the anti-adhesion | Formation of cylinder in the inflation |
|---|---|---|
| Comparative Example 1 | - | × |
| Example 1 | Stearic acid is applied on the whole surface. | ○ |
| Example 2 | Stearic acid is applied on one of surfaces. | ○ |
| Example 3 | Talc is applied on the whole surface. | ○ |
| Example 4 | Talc is applied on one of surfaces. | ○ |
| Example 5 | The film with cement is stuck on the whole surface. | ○ |
| Example 6 | The film with cement is stuck on one of surfaces. | ○ |
| Example 7 | The film not coated with cement is stuck on the whole surface. | ○ |

As seen from Table 1, the inner surfaces of the air bladder can be prevented from adhering to each other by applying a fatty acid such as stearic acid or the like or a powdery solid such as talc or the like or sticking the film with the cement or the film not coated with the cement on the whole surface or one of the surfaces of the rubber member constituting the air bladder, and as a result, the air bladder can be rendered into a cylindrical form in the inflation.

## Claims

1. An air bladder (6) for a safety tire (5) formed by sticking a sheet-shaped rubber member (2) on a flat drum (1), folding back both widthwise ends (3) of the rubber member and jointing both the ends of the rubber member at an outer diameter side with respect to the flat drum to make a cylindrical form, **characterised in that** inner surfaces (4) of the rubber member are not adhered to each other after both the widthwise ends of the rubber member are folded back, and **in that** a member having one surface adhering to a rubber and another surface not adhering to a rubber is stuck on the rubber member so that the surface adhering to the rubber of the member having one surface adhering to the rubber and another surface not adhering to the rubber can adhere to the inner surface of the rubber member.

2. An air bladder for a safety tire according to claim 1, wherein the member having one surface adhering to the rubber and another surface not adhering to the rubber is stuck onto a full inner surface of the rubber member other than the joint portion and a neighbourhood thereof.

3. An air bladder for a safety tire according to claim 1, wherein the member having one surface adhering to the rubber and another surface not adhering to the rubber is stuck on at least one of the inner surfaces contacting with each other in the rubber member after the folding of both the widthwise ends of the rubber member.

4. An air bladder for a safety tire according to claim 1, wherein the member having one surface adhering to the rubber and another surface not adhering to the rubber is a film in which a cement is applied on one surface thereof.

5. An air bladder (6) for a safety tire (5) formed by sticking a sheet-shaped rubber member (2) on a flat drum (1), folding back both widthwise ends (3) of the rubber member and jointing both the ends of the rubber member at an outer diameter side with respect to the flat drum to make a cylindrical form, **characterised in that** a sheet-shaped member is stuck on the rubber member, whereby inner surfaces (4) of the rubber member are not adhered to each other after both the widthwise ends of the rubber member are folded back.

6. An air bladder for a safety tire according to claim 5, wherein the sheet-shaped member is stuck onto a full inner surface of the rubber member other than the joint portion and a neighbourhood thereof.

## Patentansprüche

1. Luftschlauch (6) für einen Sicherheitsreifen (5), hergestellt durch das Stecken eines bahnförmigen Gummielements (2) auf eine flache Trommel (1), das Zurückschlagen der beiden breitseitigen Enden (3) des Gummielements und das Verbinden der beiden Enden des Gummielements an einer Außendurchmesserseite in Bezug auf die flache Trommel, um eine zylindrische Form herzustellen, **dadurch gekennzeichnet, dass** die Innenflächen (4) des Gummielements nicht aneinander haften, nachdem die beiden breitseitigen Enden des Gummielements zurückgeschlagen sind, und **dadurch**, dass ein Element mit einer Fläche, die an einem Gummi haftet und einer anderen Fläche, die nicht an einem Gummi haftet, auf das Gummielement gesteckt ist, so dass die an dem Gummi haftende Fläche des Elements mit einer Fläche, die an dem Gummi haftet und einer anderen Fläche, die nicht an dem Gummi haftet, an der Innenfläche des Gummielements haften kann.

2. Luftschlauch für einen Sicherheitsreifen nach Anspruch 1, wobei das Element mit einer Fläche, die an dem Gummi haftet und einer anderen Fläche, die nicht an dem Gummi haftet, auf eine vollständige Innenfläche des Gummielements mit Ausnahme des Verbindungsabschnitts und einer Nachbarschaft desselben gesteckt wird.

3. Luftschlauch für einen Sicherheitsreifen nach Anspruch 1, wobei das Element mit einer Fläche, die an dem Gummi haftet und einer anderen Fläche, die nicht an dem Gummi haftet, auf wenigstens eine der Innenflächen gesteckt wird, die einander nach dem Umschlagen der beiden breitseitigen Enden des Gummielements in dem Gummielement berühren.

4. Luftschlauch für einen Sicherheitsreifen nach Anspruch 1, wobei das Element mit einer Fläche, die an dem Gummi haftet und einer anderen Fläche, die nicht an dem Gummi haftet, eine Folie ist, wobei ein Zement auf einer Fläche desselben aufgebracht ist.

5. Luftschlauch (6) für einen Sicherheitsreifen (5), hergestellt durch das Stecken eines bahnförmigen Gummielements (2) auf eine flache Trommel (1), das Zurückschlagen der beiden breitseitigen Enden (3) des Gummielements und das Verbinden der beiden Enden des Gummielements an einer Außendurchmesserseite in Bezug auf die flache Trommel, um eine zylindrische Form herzustellen, **dadurch gekennzeichnet, dass** ein bahnförmiges Element auf das Gummielement gesteckt wird, wodurch die Innenflächen (4) des Gummielements nicht aneinander haften, nachdem die beiden breitseitigen Enden des Gummielements zurückgeschlagen sind.

6. Luftschlauch für einen Sicherheitsreifen nach Anspruch 5, wobei das bahnförmige Element auf eine vollständige Innenfläche des Gummielements mit Ausnahme des Verbindungsabschnitts und einer Nachbarschaft desselben gesteckt wird.

## Revendications

1. Chambre à air (6) pour un bandage pneumatique de sécurité (5), formée en collant un élément en caoutchouc en forme de feuille (2) sur un tambour plat (1), en repliant vers l'arrière les deux extrémités dans le sens de la largeur (3) de l'élément en caoutchouc et en reliant les deux extrémités de l'élément en caoutchouc au niveau d'un côté du diamètre extérieur par rapport au tambour plat, pour établir une forme cylindrique, **caractérisée en ce que** les surfaces internes (4) de l'élément en caoutchouc n'adhèrent pas l'une à l'autre près le repliement vers l'arrière des deux extrémités dans le sens de la largeur de l'élément en caoutchouc, et **en ce qu'**un élément, comportant une surface adhérant à un caoutchouc et une autre surface non adhérant à un caoutchouc, est collé sur l'élément en caoutchouc, de sorte que la surface adhérant au caoutchouc de l'élément comportant une surface adhérant au caoutchouc et une autre surface non adhérant au caoutchouc peut adhérer à la surface interne de l'élément en caoutchouc.

2. Chambre à air pour un bandage pneumatique de sécurité selon la revendication 1, dans laquelle l'élément comportant une surface adhérant au caoutchouc et une autre surface non adhérant au caoutchouc est collé sur une surface interne complète de l'élément en caoutchouc, autre que la partie de liaison et une partie voisine de celle-ci.

3. Chambre à air pour un bandage pneumatique de sécurité selon la revendication 1, dans laquelle l'élément comportant une surface adhérant au caoutchouc et une autre surface non adhérant au caoutchouc est collée sur au moins une des surfaces internes se contactant l'une l'autre dans l'élément en caoutchouc après le repliement des deux extrémités dans le sens de la largeur de l'élément en caoutchouc.

4. Chambre à air pour un bandage pneumatique de sécurité selon la revendication 1, dans laquelle l'élément comportant une surface adhérant au caoutchouc et une autre surface non adhérant au caoutchouc est constitué par un film dans lequel un ciment est appliqué sur une de ses surfaces.

5. Chambre à air (6) pour un bandage pneumatique de sécurité (5), formée en collant un élément de caoutchouc en forme de feuille (2) sur un tambour plat (1), en repliant vers l'arrière les deux extrémités dans le sens de la largeur (3) de l'élément en caoutchouc et en reliant les deux extrémités de l'élément en caoutchouc au niveau d'un côté du diamètre extérieur par rapport au tambour plat, pour établir une forme cylindrique, **caractérisée en ce qu'**un élément en forme de feuille est collé sur l'élément en caoutchouc, les surfaces internes (4) de l'élément en caoutchouc n'adhérant ainsi pas l'une à l'autre après le repliement vers l'arrière des deux extrémités dans le sens de la largeur de l'élément en caoutchouc.

6. Chambre à air pour un bandage pneumatique de sécurité selon la revendication 5, dans laquelle l'élément en forme de feuille est collé sur une surface interne complète de l'élément en caoutchouc, autre que la partie de liaison et une partie voisine de celle-ci.
